# EUROPEAN PATENT APPLICATION

(11) **EP 4 108 555 A1**
(43) Date of publication of application: **28.12.2022**
(21) Application number: 22174450.1
(22) Date of filing: 19.05.2022
(51) Int. Cl.: B62D 25/24, B62D 25/20, B62D 33/06

(54) **DRIVER'S SEAT PERIPHERAL STRUCTURE, AND SEAT PERIPHERAL STRUCTURE OF VEHICLE**

(30) Priority: 22.06.2021 JP 2021103519
(71) Applicant: TOYOTA JIDOSHA KABUSHIKI KAISHA, Toyota-shi, Aichi-ken, 471-8571 (JP)
(72) Inventor: HARA, Yasuhiro, TOYOTA-SHI, AICHI-KEN, 471-8571 (JP); KOREISHI, Norimasa, TOYOTA-SHI, AICHI-KEN, 471-8571 (JP); WATANABE, Jumpei, TOYOTA-SHI, AICHI-KEN, 471-8571 (JP); ISHIOKA, Hirotaka, TOYOTA-SHI, AICHI-KEN, 471-8571 (JP)
(74) Representative: Cabinet Beau de Loménie

(57) **Abstract**

A driver's seat peripheral structure (10) includes a driver's seat (36) provided upward from a power unit compartment (30) at a front portion of a vehicle, a front floor panel (42) that makes up a floor face of the driver's seat (36) and that is provided with an opening having a size that enables an electronic unit (34) in the power unit compartment (30) to be extracted, and a lid member (50) that is attached to the front floor panel (42) to close the opening and to which a reinforcing member (60) is integrally attached.

## Description

### 1. Field of the Invention

The invention relates to a driver's seat peripheral structure and a seat peripheral structure of a vehicle.

### 2. Description of Related Art

Japanese Unexamined Patent Application Publication No. 11-91630 (JP 11-91630 A) discloses a vehicle body structure in which an engine is supported at a front portion of a chassis frame. Now, in the vehicle body structure of JP 11-91630 A, an upper opening for engine inspection is formed in a floor face of a front floor panel, and a rear opening for removing the engine is formed in a stepped portion of the front floor panel.

### SUMMARY OF THE INVENTION

In the vehicle body structure described in JP 11-91630 A, a power unit compartment, in which the engine and so forth are disposed, can be accessed from a vehicle cabin side. However, since the front floor panel is formed with the upper opening and the rear opening, there is a possibility that rigidity around the driver's seat will decrease.

The invention provides a driver's seat peripheral structure capable of suppressing decrease in rigidity around a driver's seat, and a vehicle seat peripheral structure capable of suppressing decrease in rigidity around seats of the vehicle, while enabling access to the power unit compartment.

A driver's seat peripheral structure according to a first aspect of the invention includes a driver's seat provided upward from a power unit compartment at a front portion of a vehicle, a front floor panel that makes up a floor face of the driver's seat and that is provided with an opening, and a lid member that is attached to the front floor panel to close the opening and with which a reinforcing member is integrally attached. The opening may have a size that enables an electronic unit in the power unit compartment to be extracted.

In the driver's seat peripheral structure according to the first aspect of the invention, the driver's seat is provided upward from the power unit compartment, and the floor face of the driver's seat is formed of the front floor panel. Now, the front floor panel is provided with the opening having a size enabling the electronic unit in the power unit compartment to be extracted. Thus, the electronic unit can be extracted from the vehicle cabin side when inspecting the power unit compartment.

Also, the lid member to be attached to the front floor panel to close the opening is provided, and the reinforcing member is integrally attached to the lid member. Thus, the lid member is reinforced by the reinforcing member, and accordingly decrease in the rigidity of the front floor panel can be suppressed even when the opening is provided. Note that the term "integrally" as used here is not limited to a configuration in which members are inseparably joined, but rather is a concept that broadly includes a state in which the members are in close contact and fixed. Accordingly, a configuration may be made in which the reinforcing member is removable from the lid member, as long as the configuration is a configuration in which the lid member and the reinforcing member are in close contact with each other and fixed in a state in which the reinforcing member is attached.

In the driver's seat peripheral structure according to the above aspect, the reinforcing member and the lid member may be in contact with each other and fixed. Thus, a load applied to the lid member is conveyed to the reinforcing member, and accordingly decrease in the rigidity of the front floor panel can be suppressed even when the opening is provided. The contact between the reinforcing member and the lid member may be a close contact.

In the driver's seat peripheral structure according to the above aspect, the reinforcing member and the lid member may be fixed by welding. Thus, a load applied to the lid member is conveyed to the reinforcing member, and accordingly decrease in the rigidity of the front floor panel can be suppressed even when the opening is provided.

In the driver's seat peripheral structure according to the above aspect, the reinforcing member may be a cross member that extends in a vehicle width direction and forms a closed cross-sectional shape with the lid member.

In the driver's seat peripheral structure according to the above aspect, the lid member may be reinforced by the cross member extending in the vehicle width direction. Accordingly, a load can be conveyed in the vehicle width direction via the cross member.

In the driver's seat peripheral structure according to the above aspect, both end portions of the cross member in the vehicle width direction may be attached to the front floor panel at positions further outward from the lid member in the vehicle width direction.

In the driver's seat peripheral structure according to the above aspect, both end portions of the cross member in the vehicle width direction may be attached to the front floor panel at positions further outward from the lid member in the vehicle width direction. Accordingly, a load applied to the front floor panel can be conveyed in the vehicle width direction and to the lid member via the cross member.

The driver's seat peripheral structure according to the above aspect may further include a pair of cross mounting members each provided at corresponding one of end portions of the front floor panel in the vehicle width direction. One end portion of the cross member may be joined to one of the cross mounting members in a state of being overlaid on the one of the cross mounting members, and another end portion of the cross member may be joined to another one of the cross mounting members in a state of being overlaid on the other one of the cross mounting members.

In the driver's seat peripheral structure according to the above aspect, the cross mounting members are linked in the vehicle width direction by the cross member. Thus, when a load is input from one end side of the front floor panel in the vehicle width direction, the load can be effectively conveyed to the other end side via the cross mounting members and the cross member.

In the driver's seat peripheral structure according to the above aspect, the lid member may be provided with a raised bead that extends in the vehicle width direction and bulges upward in the vehicle.

In the driver's seat peripheral structure according to the above aspect, the lid member is deformed in an upwardly bent shape at the time of a frontal collision of the vehicle, and accordingly the lid member can be suppressed from coming into contact with parts in the power unit compartment.

In the driver's seat peripheral structure according to the above aspect, a bracket for an accelerator pedal may be attached to the reinforcing member.

In the driver's seat peripheral structure according to the above aspect, simply removing the lid member enables the accelerator pedal to be removed together.

A seat peripheral structure of a vehicle according to a second aspect of the invention includes a seat provided upward from a power unit compartment of the vehicle, a floor panel that makes up a floor face of the seat and that is provided with an opening, a lid member that is attached to the floor panel to close the opening, and a reinforcing member integrally attached to the lid member. The opening may have a size that enables an electronic unit in the power unit compartment to be extracted.

In the seat peripheral structure according to the second aspect of the invention, the seat is provided upward from the power unit compartment, and the floor face of the seat is formed of the floor panel. Now, the floor panel is provided with the opening having a size enabling the electronic unit in the power unit compartment to be extracted. Thus, the electronic unit can be extracted from the vehicle cabin side when inspecting the power unit compartment.

Also, the lid member to be attached to the floor panel to close the opening is provided, and the reinforcing member is integrally attached to the lid member. Thus, the lid member is reinforced by the reinforcing member, and accordingly decrease in the rigidity of the front floor panel can be suppressed even when the opening is provided.

As described above, the driver's seat peripheral structure and the seat peripheral structure according to the aspects of the invention enable decrease in rigidity around the driver's seat to be suppressed while enabling access to the power unit compartment.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic side sectional view that schematically illustrates a front portion of a vehicle cabin of a vehicle to which a driver's seat peripheral structure according to an embodiment is applied;
FIG. 2 is a perspective view of a periphery of a driver's seat, as viewed from an upward and rearward side of the vehicle;
FIG. 3 is a plan view illustrating a principal portion of a front floor panel; and
FIG. 4 is a plan view illustrating a state in which a lid member is removed from the state in FIG. 3.

### DETAILED DESCRIPTION OF EMBODIMENTS

Hereinafter, a driver's seat peripheral structure 10 according to an embodiment of the invention will be described with reference to the drawings. Further, an arrow FR, an arrow RH, and an arrow UP that are shown in the drawings as appropriate indicate a vehicle-forward direction (direction of travel), a vehicle-rightward direction, and a vehicle-upward direction, respectively. Hereinafter, when description is made simply using terms indicating directions i.e., forward and rearward, right and left, and upward and downward, these indicate front and rear in a vehicle front-rear direction, right and left in a vehicle right-left direction (vehicle width direction), and up and down in a vehicle up-down direction, unless otherwise specified.

### Overall Configuration around Driver's Seat

First, an overall configuration around a driver's seat 36 will be described, following which a configuration around a front floor panel 42, which is a principal portion of the invention, will be described.

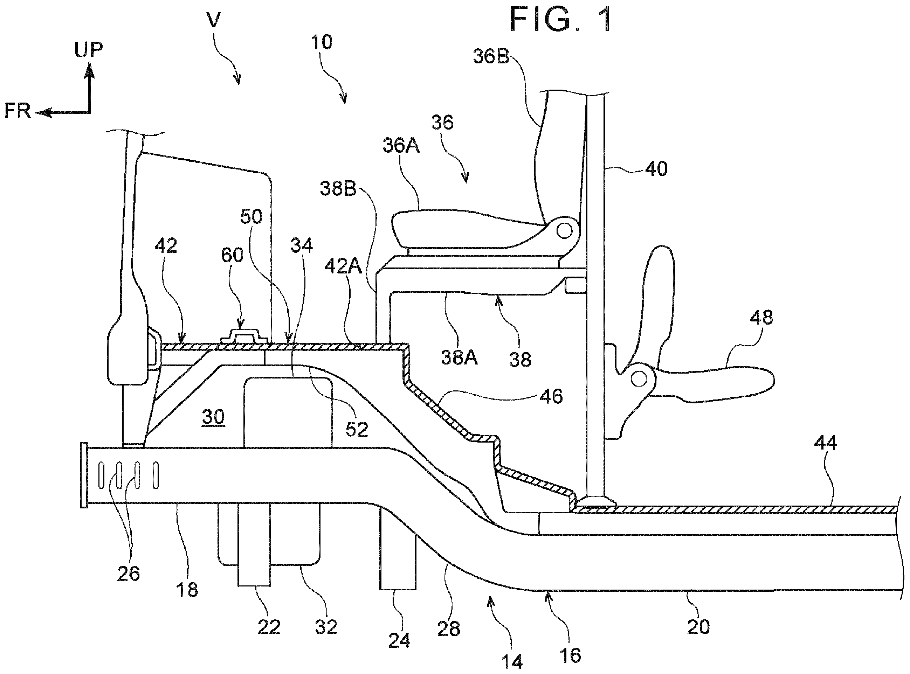

As illustrated in FIGS. 1 to 4, a vehicle V to which the driver's seat peripheral structure 10 according to the present embodiment is applied is a so-called frame vehicle, in which a vehicle body is supported by a ladder frame 14, and is, for example, a bus. Accordingly, the vehicle V has a substantially cuboid outer shape, although omitted from illustration. Also, the vehicle V according to the present embodiment is, for example, a battery electric vehicle that has a motor 32 as a drive source.

The ladder frame 14 includes side frames 16, a cross member 22, and a cross member 24. The side frames 16 are provided on both sides of the vehicle V in the vehicle width direction, and each extend in the vehicle front-rear direction.

The cross member 22 extends at a front portion of the vehicle V in the vehicle width direction, and links a pair of the side frames 16. The cross member 24 is provided rearward from the cross member 22, extending in the vehicle width direction, and links the side frames 16.

Each side frame 16 includes a front side frame 18, a center side frame 20, and a rear side frame (omitted from illustration). The front side frames 18 extend in the front-rear direction at the front portion of the vehicle V, on both sides in the vehicle width direction. The center side frames 20 extend in the front-rear direction at the middle portion of the vehicle V in the front-rear direction, on both sides in the vehicle width direction. The rear side frames extend in the front-rear direction at the rear portion of the vehicle V, on both sides in the vehicle width direction, although omitted from illustration.

The front side frames 18, the center side frames 20, and the rear side frames are made of steel material formed into a square cylinder shape, and have a substantially rectangular and closed cross-sectional shape as viewed in the front-rear direction, for example. Cross members similar to the cross member 22 and the cross member 24 are provided between the center side frames 20 and between the rear side frames.

A plurality of beads extending in the up-down direction is formed arrayed in the front-rear direction at front end portions of the front side frames 18. As a result, the front end portions of the front side frames 18 are more vulnerable to loads in the front-rear direction than other parts, and are configured to, at the time of a frontal collision, absorb part of the collision load by being deformed.

Between the front side frames 18 and the center side frames 20, kick-up portions 28 are provided extending diagonally downward from rear end portions of the front side frames 18 toward front end portions of the center side frames 20.

Here, a power unit compartment 30 is provided between a right and left pair of the front side frames 18. The motor 32 and an electronic unit 34 are disposed in the power unit compartment 30.

The motor 32 is supported by the right and left front side frames 18 via the cross member 22, the cross member 24, and so forth. Also, the vehicle V travels by conveying driving force generated by the motor 32 to wheels that are omitted from illustration.

The electronic unit 34 is disposed upward from the motor 32, and is a unit that controls the electric power supplied to the motor 32. The electronic unit 34 is supported by the right and left front side frames 18 via a support frame that is omitted from illustration. A power unit includes the motor 32 and the electronic unit 34.

The driver's seat 36 is provided upward from the power unit compartment 30. The driver's seat 36 includes a seat cushion 36A and a seat back 36B. Further, the driver's seat 36 is supported from the downward side by a seat frame 38, and the seat frame 38 includes a level portion 38A extending in a level direction along a lower face of the seat back 36B and a perpendicular portion 38B extending downward from a front end portion of the level portion 38A. A rear end portion of the level portion 38A is fixed to a support column 40 extending in the up-down direction. Also, a lower end portion of the perpendicular portion 38B is fixed to the front floor panel 42.

The front floor panel 42 is a substantially plate-shaped member making up the floor face of the driver's seat 36. Further, on the rearward side from the front floor panel 42, a substantially plate-shaped center floor panel 44, making up the floor face at the middle portion of the vehicle V, is provided. Further, an inclined panel 46 is provided between the front floor panel 42 and the center floor panel 44, and the inclined panel 46 is gradually tilted downward from the front floor panel 42 toward the center floor panel 44. The front floor panel 42 and the center floor panel 44 are linked by the inclined panel 46. Note that the front floor panel 42 and the inclined panel 46 may be integrally formed of a rigid plate or the like, and the center floor panel 44 and the inclined panel 46 may be integrally formed of a rigid plate or the like. Also, a rear floor panel that is omitted from illustration is provided on the rearward side of the center floor panel 44.

Now, the support column 40 to which the rear end portion of the level portion 38A of the seat frame 38 is fixed is erected at a front end portion of the center floor panel 44. Also, the support column 40 is provided with a partitioning portion that is omitted from illustration, extending in the vehicle width direction. A seat 48 for seating a passenger riding the vehicle V is attached to the partitioning portion. Although only one seat 48 is illustrated in FIG. 1 as an example, a plurality of seats may be attached. Downward from the center floor panel 44 is disposed a battery, omitted from illustration, for storing electric power to be supplied to the motor 32. High-voltage electric power is supplied from the battery to the electronic unit 34, and a current that is controlled by the electronic unit 34 is supplied to the motor 32.

### Configuration around Front Floor Panel 42

An opening 42A is provided in the front floor panel 42, at an underfoot portion of the driver's seat 36. The opening 42A is provided upward from the electronic unit 34, and the opening 42A is formed to a size enabling the electronic unit 34 to be extracted. Further, the opening 42A is closed by a lid member 50.

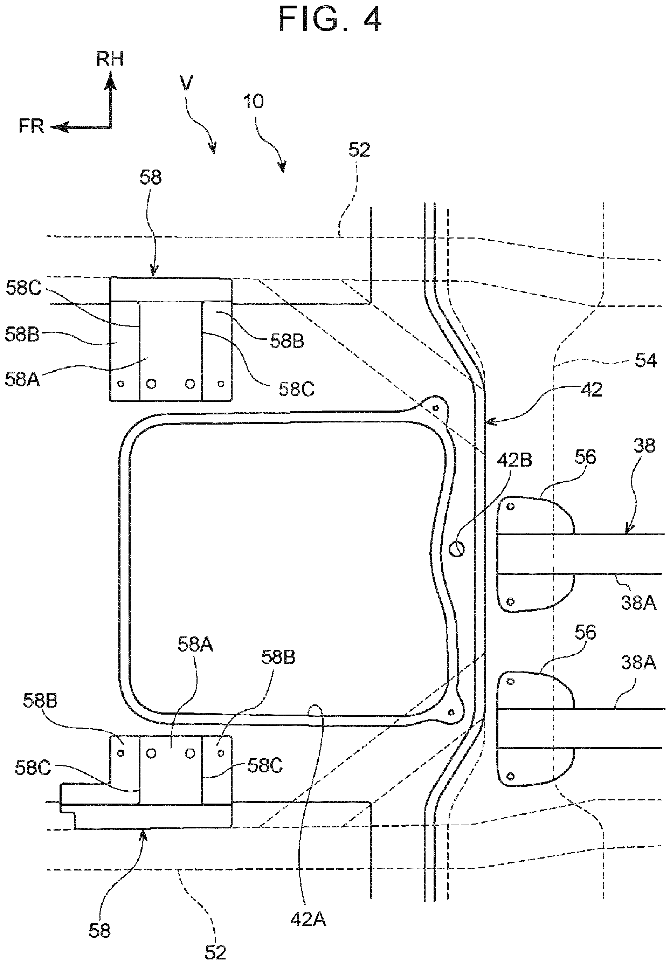

FIG. 4 illustrates a state in which the lid member 50 is removed. As illustrated in FIG. 4, the opening 42A provided in the front floor panel 42 has a substantially rectangular shape in plan view, and a middle portion in the vehicle width direction of a rear edge of the opening 42A bulges inward. Accordingly, the rear edge of the opening 42A has a curved shape. Further, a service hole 42B is provided on the rearward side of the opening 42A. The service hole 42B is a hole used as a work hole for fastening the electronic unit 34 and so forth, and the rear edge of the opening 42A bulges inward so as to circumvent the service hole 42B.

Both end portions of the front floor panel 42 in the vehicle width direction are supported from the downward side by a pair of front side members 52 which are structural members. The front side members 52 extend in the front-rear direction of the vehicle, and are provided by joining a plurality of panels. Also, each of the front side members 52 has a substantially rectangular closed cross-sectional shape as viewed from the front-rear direction, and the front side members 52 are linked by a front cross member 54 extending in the vehicle width direction.

Upward from the front cross member 54, a pair of right and left seat brackets 56 is provided for fixing the seat frame 38. The seat bracket 56 on the right side is located rearward from the middle portion of the opening 42A in the vehicle width direction, and the seat bracket 56 on the left side is located rearward from a left edge of the opening 42A. The seat frame 38 is attached to the front cross member 54 via these seat brackets 56. Accordingly, the driver's seat 36 is provided at a position offset to the left side with respect to the opening 42A.

Now, a pair of cross mounting members 58 is each provided at corresponding one of end portions of the front floor panel 42 in the vehicle width direction. The cross mounting members 58 are provided on both the right and left sides across the opening 42A. Also, each cross mounting member 58 is formed with a substantially hat-shaped cross-sectional shape as viewed from the vehicle width direction. Specifically, each cross mounting member 58 includes an upper wall portion 58A, flange portions 58B, and upright wall portions 58C.

The flange portions 58B are provided at a front end portion and a rear end portion of the cross mounting member 58, and are joined to an upper face of the front floor panel 42 in a state of being overlaid thereupon, with the up-down direction as the plate thickness direction. The upright wall portions 58C extend upward from end portions of the flange portions 58B facing each other, with the front-rear direction as the plate thickness direction. The upper wall portion 58A links upper end portions of the upright wall portions 58C together, with the up-down direction as the plate thickness direction. Accordingly, the upright wall portions 58C and the upper wall portion 58A of the cross mounting member 58 and the front floor panel 42 together form a closed cross-sectional shape.

### Lid Member 50

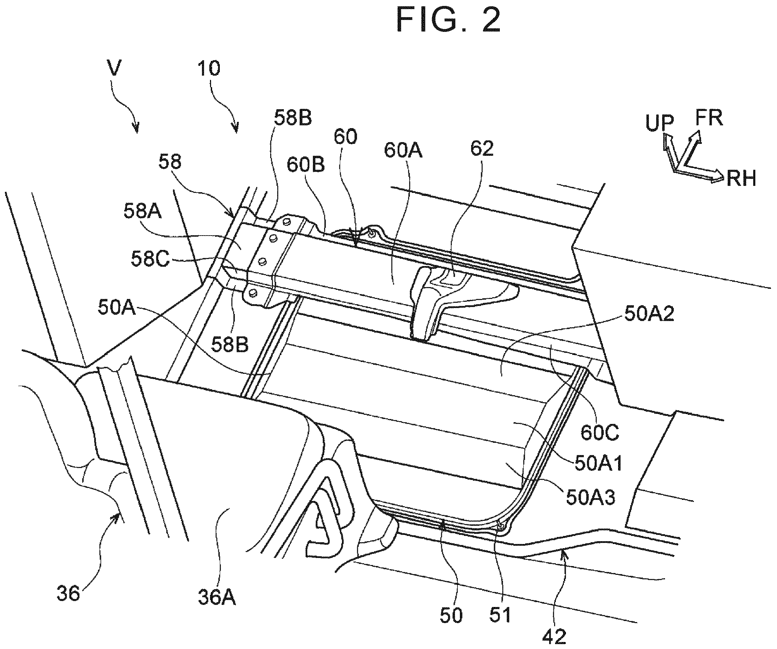

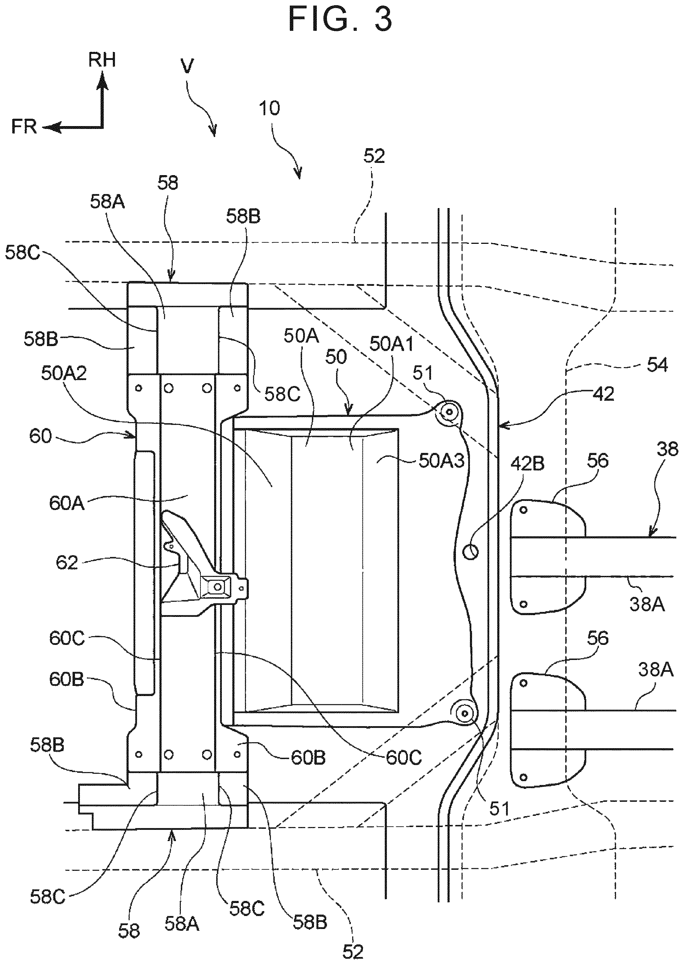

As illustrated in FIGS. 2 and 3, the lid member 50 is formed in a shape corresponding to the opening 42A of the front floor panel 42, and has a substantially rectangular shape that is one size larger than the opening 42A in plan view. Also, a rear edge of the lid member 50 has a curved shape that is similar to the rear edge of the opening 42A.

Now, bolt holes that are omitted from illustration are formed at positions that are at the rear end portions of the lid member 50 and that are also at corners at both ends in the vehicle width direction, and bolts 51 are inserted through the bolt holes. The rear portion of the lid member 50 is joined to the front floor panel 42 by these bolts 51.

A raised bead 50A is formed at the middle portion of the lid member 50. The raised bead 50A extends in the vehicle width direction and bulges toward the upward side of the vehicle. Also, the raised bead 50A according to the present embodiment is formed over a wide range excluding a front end portion and the rear end portion of the lid member 50, as one example.

Further, the raised bead 50A is formed in a substantially trapezoidal shape as viewed from the vehicle width direction. Specifically, the raised bead 50A includes a flat planar portion 50A1 that is substantially rectangular in plan view, an inclined face portion 50A2 inclined diagonally downward forward from the flat planar portion 50A1, and an inclined face portion 50A3 inclined diagonally downward rearward from the flat planar portion 50A1. Also, the inclined face portion 50A2 has a form that is longer in the front-rear direction than the inclined face portion 50A3.

Now, a cross member 60 serving as a reinforcing member is integrally attached on the forward side of the raised bead 50A on the lid member 50. The cross member 60 is formed in an elongated form, with the vehicle width direction as the longitudinal direction thereof, and is longer in the vehicle width direction than the lid member 50. Accordingly, the vehicle right-side end portion of the cross member 60 projects further toward the right side in the vehicle than the lid member 50, and the vehicle left-side end portion of the cross member 60 projects further toward the left side in the vehicle than the lid member 50.

The cross member 60 includes an upper wall portion 60A, flange portions 60B, and upright wall portions 60C. The flange portions 60B are provided at a front end portion and a rear end portion of the cross member 60 with the up-down direction as the plate thickness direction, and middle portions of the flange portions 60B in the vehicle width direction are welded to an upper face of the lid member 50 in a state of being overlaid thereon.

Also, both end portions of the flange portions 60B in the vehicle width direction are formed wider than the middle portion in the vehicle width direction that is welded, with the right end portion of the flange portion 60B in the vehicle width direction being joined to the flange portion 58B of the cross mounting member 58 provided on the right side by fasteners such as bolts, in a state of being overlaid thereon. On the other hand, the left end portion of the flange portion 60B of the cross member 60 in the vehicle width direction is joined to the flange portion 58B of the cross mounting member 58 provided on the left side in the vehicle by fasteners such as bolts, in a state of being overlaid thereon.

The upright wall portions 60C extend upward from the end portions of the flange portions 60B facing each other, with the front-rear direction as the plate thickness direction. The upper wall portion 60A links upper end portions of the upright wall portions 60C together, with the up-down direction as the plate thickness direction. Also, the vehicle right-side end portion of the upper wall portion 60A is joined by fasteners such as bolts to the upper wall portion 58A of the cross mounting member 58 provided on the right side, in a state of being overlaid thereon. On the other hand, the vehicle left-side end portion of the upper wall portion 60A is joined by fasteners such as bolts to the upper wall portion 58A of the cross mounting member 58 provided on the left side, in a state of being overlaid thereon. Thus, the front portion of the lid member 50 is joined to the front floor panel 42 via the cross member 60 and the cross mounting members 58. Also, the upright wall portions 60C and the upper wall portion 60A of the cross member 60 and the lid member 50 form a closed cross-sectional shape.

Further, an accelerator pedal bracket 62 is welded to the middle portion of the upper wall portion 60A of the cross member 60 in the vehicle width direction. The accelerator pedal bracket 62 is provided at the middle portion of the cross member 60 in the vehicle width direction, and an accelerator pedal that is omitted from illustration is attached to the accelerator pedal bracket 62.

### Effects

Next, effects of the present embodiment will be described.

In the driver's seat peripheral structure 10 according to the present embodiment, the driver's seat 36 is provided upward from the power unit compartment 30, and the floor face of the driver's seat 36 is formed of the front floor panel 42. Now, the front floor panel 42 is provided with the opening 42A having a size enabling the electronic unit 34 in the power unit compartment 30 to be extracted. Thus, the electronic unit 34 can be extracted from the vehicle cabin side when inspecting the power unit compartment 30.

Further, the service hole 42B is provided rearward from the opening 42A, and accordingly the service hole 42B can be used when fastening or unfastening the electronic unit 34.

Now, the lid member 50 is attached to the front floor panel 42, and the opening 42A is closed by the lid member 50. The cross member 60, which is a reinforcing member, is integrally attached to the lid member 50. Thus, the lid member 50 is reinforced by the cross member 60, and accordingly decrease in the rigidity of the front floor panel 42 can be suppressed even when the front floor panel 42 is provided with the opening 42A. That is to say, in the driver's seat peripheral structure 10 according to the present embodiment, decrease in rigidity around the driver's seat can be suppressed while enabling access to the power unit compartment 30.

In particular, in a structure in which the driver's seat 36 is provided upward from the power unit compartment 30, such as in the vehicle V according to the present embodiment, the distance from the front end of the vehicle V to the driver's seat 36 is short, and accordingly ensuring safety performance at the time of a collision is difficult. Now, in the present embodiment, the lid member 50 is reinforced by the cross member 60 extending in the vehicle width direction, and both end portions of the cross member 60 in the vehicle width direction project outward beyond the lid member 50 in the vehicle width direction, and accordingly the load can be conveyed in the vehicle width direction via the cross member 60. That is to say, rigidity around the driver's seat 36 can be improved.

Also, in the present embodiment, both end portions of the cross member 60 in the vehicle width direction are joined to the cross mounting members 58, and accordingly the cross mounting members 58 are in a state of being linked by the cross member 60 in the vehicle width direction. Thus, a load input from one end side of the front floor panel 42 in the vehicle width direction can be effectively conveyed to the other end side. In particular, in the present embodiment, the cross mounting members 58 are connected to the front side members 52 which are structural members, and accordingly the load input to the front floor panel 42 can be effectively conveyed to the front side member 52. Further, the front side members 52 extend in the front-rear direction of the vehicle, and accordingly the input load can be dispersed to the rearward side of the vehicle.

Further, in the present embodiment, the lid member 50 is provided with the raised bead 50A, and accordingly the rigidity of the lid member 50 can be improved. Further, the raised bead 50A is bulged upward in the vehicle, and accordingly the lid member 50 can be bent upward at the time of a frontal collision of the vehicle V. Thus, the lid member 50 can be suppressed from coming into contact with parts in the power unit compartment 30, such as the electronic unit 34.

That is to say, when the lid member is not provided with the raised bead 50A, or when the lid member is provided with a recessed bead bulging downward, the lid member may bend to the downward side in the vehicle when a load is input to the lid member from the forward side of the vehicle at the time of a frontal collision, in some cases. Now an arrangement is conceivable in which the electronic unit 34 is disposed near the lid member so as to be easily extracted from the opening 42A during inspection. In such a configuration, there is a possibility that the downward-bending lid member will come into contact with the electronic unit 34, through which a high voltage flows.

Conversely, in the present embodiment, providing the raised bead 50A that bulges upward in the vehicle enables the lid member 50 to be bent upward in the vehicle starting from the raised bead 50A at the time of a frontal collision, so as to be in an upward-bent state. As a result, even when the distance between the electronic unit 34 and the lid member 50 is short, the lid member 50 can be suppressed from coming into contact with the electronic unit 34.

Also, in the present embodiment, the cross member 60 is provided with the accelerator pedal bracket 62. Accordingly, simply removing the lid member 50 enables the accelerator pedal to be removed together.

Although the driver's seat peripheral structure 10 according to the embodiment has been described above, it is needless to say that this can be carried out in various forms without departing from the essence of the invention. For example, the vehicle V is a battery electric vehicle having the motor 32 as a drive source in the above embodiment, but this is not restrictive. That is to say, application may be made to a hybrid electric vehicle having a motor and an engine as drive sources.

Further, the lid member 50 to which the cross member 60 is integrally attached as a reinforcing member is described in the above embodiment, but this is not restrictive. That is to say, a reinforcing member other than a cross member may be integrally attached to the lid member 50, and for example, a reinforcing member having a longitudinal direction in the vehicle front-rear direction may be integrally attached to the lid member 50.

Further, the lid member 50 is provided with the raised bead 50A in the above embodiment, but this is not restrictive. For example, a lid member with a raised bead of a different shape formed may be provided. Also, the shape of the lid member itself may be a shape that is raised upward in the vehicle, with no raised bead provided. In this case as well, the lid member can be bent upward at the time of a frontal collision. Note however, that providing the raised bead 50A is preferable from the perspective of improving rigidity.

Moreover, the accelerator pedal bracket 62 is attached to the cross member 60 in the above embodiment, but this is not restrictive, and the accelerator pedal bracket 62 may be attached to another part. The accelerator pedal bracket 62 is preferably attached to a portion with relatively high rigidity, and accordingly attaching the accelerator pedal bracket 62 to the cross member 60 as in the above embodiment enables shifting of the position of the accelerator pedal to be effectively suppressed.

## Claims

1. A driver's seat peripheral structure of a vehicle, the driver's seat peripheral structure comprising:
a driver's seat (36) configured to be provided upward from a power unit compartment (30) at a front portion of the vehicle;
a front floor panel (42) that makes up a floor face of the driver's seat, the front floor panel (42) being provided with an opening (42A) having a size that enables an electronic unit (34) provided in the power unit compartment (30) to be extracted;
a lid member (50) that is attached to the front floor panel (42) to close the opening (42A); and
a reinforcing member (60) integrally attached to the lid member (50).

2. The driver's seat peripheral structure according to claim 1, wherein the reinforcing member (60) and the lid member (50) are in contact with each other and fixed.

3. The driver's seat peripheral structure according to claim 2, wherein the reinforcing member (60) and the lid member (50) are fixed by welding.

4. The driver's seat peripheral structure according to any one of claims 1 to 3, wherein the reinforcing member (60) is a cross member (60) that extends in a vehicle width direction and forms a closed cross-sectional shape with the lid member (50).

5. The driver's seat peripheral structure according to claim 4, wherein both end portions of the cross member (60) in the vehicle width direction are attached to the front floor panel (42) at positions further outward from the lid member (50) in the vehicle width direction.

6. The driver's seat peripheral structure according to claim 5, further comprising a pair of cross mounting members (58) each provided at corresponding one of end portions of the front floor panel (42) in the vehicle width direction, wherein one end portion of the cross member (60) is joined to one of the cross mounting members (58) in a state of being overlaid on the one of the cross mounting members (58), and another end portion of the cross member (60) joined to another one of the cross mounting members (58) in a state of being overlaid on the other one of the cross mounting members (58).

7. The driver's seat peripheral structure according to any one of claims 1 to 6, wherein the lid member (50) is provided with a raised bead (50A) that extends in the vehicle width direction and bulges upward in the vehicle.

8. The driver's seat peripheral structure according to any one of claims 1 to 7, wherein an accelerator pedal bracket (62) is attached to the reinforcing member (60).
